# EUROPEAN PATENT APPLICATION

(11) **EP 1 059 069 A1**
(43) Date of publication of application: **13.12.2000**
(21) Application number: 99870115.5
(22) Date of filing: 07.06.1999
(51) Int. Cl.: A61C 17/00

(54) **A denture cleaning apparatus**

(71) Applicant: THE PROCTER & GAMBLE COMPANY, Cincinnati, Ohio 45202 (US)
(72) Inventor: Boswell, Emily Charlotte, Twickenham, Middlesex TW1 1AP (GB); Edwards, Mark Leuan, Woking GU21 2AP (GB)
(74) Representative: Gault, Nathalie

(57) **Abstract**

The invention relates to a denture cleaning apparatus consisting of a container (1), for holding cleaning fluid, having a container bottom (2) and a container side wall (3). The container bottom (2) comprises a core (20).

Such a denture cleaning apparatus is particularly suited for use in a micro-wave oven.

## Description

### Technical Field

The present invention relates to a cleaning apparatus for dentures orthodontic brackets and the like. In particular, the invention relates to a cleaning apparatus for holding a hot fluid.

### Background

A common method for cleaning a denture is to immerse the denture in a warm or hot solution of a cleaning product, the solution being contained within an apparatus which may be a glass or a beaker but will often be a purpose designed receptacle. Such purpose designed receptacles are well known and typically comprise a container, a lid and a basket for suspending the denture in the container. Typical examples of such receptacles are described in DE 19 09 545, BE 898,818, US 5,275,185 and US 5,184,718. More elaborate cleaning receptacles employing electrical stirrers or other agitation means are also known, for example those described in EP-A-28,672 and FR 2,738,479.

Typical usage instructions for denture cleaning tablets and granules are to dissolve the product in water at about 40 to 50°C, this often corresponding to the temperature of a domestic hot water supply. With cleaning compositions comprising active oxygen bleaches however, cleaning activity is rather slow at this temperature. One of the methods used to compensate for this is to use a bleach activator, as is now well known in the denture cleansing art.

Hot water or a boost in hot water temperature can in particular be provided by use of microwave heating, such as described in US 5,201,411 and US 5,314,543.

Despite the foregoing it seems that relatively little attention has been paid to the design of denture cleaning apparatus in order either to minimise the amount of cleaning fluid used or to optimise micro-wave employment.

Accordingly, it is an object of this invention to provide a denture cleaning apparatus that allows use of a minimal quantity of cleaning fluid and provides optimised micro-wave employment.

It is a further object of this invention to provide a denture cleaning apparatus that can be comfortably handled when containing a very hot fluid.

It is yet a further object of this invention to provide a heat retaining denture cleaning apparatus that is simple to manufacture.

It is a still further object of this invention to improve the cleaning performance of a denture cleaning fluid.

### Summary of the Invention

The invention provides a denture cleaning apparatus consisting of a container, for holding cleaning fluid, having a container bottom and a container side wall, characterised in that the container bottom comprises a core.

### Detailed Description of the Invention

The apparatus and methods herein are for cleaning a denture. By "denture" is meant any device that is designed to be worn within the mouth, for the purpose of replacing or supporting a person's teeth, over a period of several days or more but that may be temporarily removed from the mouth by the wearer for the purpose of cleaning or hygienic treatment. This includes artificial teeth and also orthodontic brackets, bridges and the like. A denture may be an upper or a lower denture. The invention relates to an apparatus suitable for fitting one denture or, in another embodiment, two dentures, i.e. typically an upper and a lower denture.

The denture cleaning apparatus of the invention consists of a container, for holding cleaning fluid, having a container bottom and a container side wall, characterised in that the container bottom comprises a core. Indeed, it was found that providing the container with such a core would allow to avoid filling the volume occupied by the core with the cleaning fluid, so that a minimum amount of cleaning fluid is thereby used. This allows to provide for more washes than with traditional apparatus for a given volume of cleaning fluid, thus providing a more environmentally friendly and cost effective use of the cleaning fluid. A typical fill-volume for an aqueous solution of the present invention is preferably of less than 100 mL per denture. More preferably, for an apparatus suitable for containing one denture only, the filling volume for cleaning fluid is from about 25 to 75 mL, more preferably from 30 to 55 mL, even more preferably of from 35 to 45 mL, and most preferably of 40 mL. A typical fill-volume for an aqueous solution of the present invention is from about 65 to 150 mL, more preferably from 70 to 110 mL, even more preferably of from 75 to 85 mL, and most preferably of 80 mL for an apparatus fitting both an upper and a lower denture.

By filling volume it should be understood the volume necessary to cover the parts of the denture to be washed with cleaning fluid.

In a preferred embodiment, the core has substantially the shape of a palatine vault, preferably forming an elongated torroid-shaped valley around the palantine vault, where the denture will sit. Indeed, a core having such a shape will be lodged under the corresponding palatine vault of the denture, so that the volume occupied by the core and which does not have to be filled with cleaning fluid is thereby maximised.

Further, the core according to the invention allows to optimise micro-wave heating and microwave uniformity, in that it provides a microwave influx passage, thus facilitating heating of the content of the container, especially the portion surrounding the core throughout the heating cycle, this portion being preferably a valley in the shape of an elongated torroid when the apparatus is suitable for fitting both an upper and a lower denture, or being preferably in the shape of a horse shoe when the apparatus is suitable for fitting one denture only.

It was found that the following dimensions of the core are particularly suitable for microwave penetration and uniform heating into this solution, the dimensions being of from 1.0 cm and up to 2.5cm in width, and of from 1.0 and up to 3.0 cm in height. Placement of a denture within an apparatus comprising such a core results in a solution filled cavity between the denture and the container side wall being in the range of from 0 up to 1.2cm depending on the size of the denture. This provides appropriate microwave penetration into the solution, by providing solution depths of from 0 up to 2.0cm, most preferably of from 0.8 and up to 1.2cm. This leads to an economy in micro-wave energy via a reduced heating time, particularly when combined with the advantage of using less liquid than in traditional apparatus for the same effect.

A further advantage over a traditional apparatus is that the heating of the cleaning liquid will be rendered more homogeneous by means of the extra microwave influx passage provided by the core.

The core has preferably substantially the shape of a palatine vault. This should be understood in that the core is a low loss core extending vertically between upwards from the bottom of the container. Considering that dentures have the shape of a palatine vault, it is most appropriate to have such a shape for the core. Such a palatine vault shape substantially corresponds to the quarter of an ovoid or ellipsoid.

In a preferred embodiment, the apparatus comprises a double core, preferably in a double palatine vault shape, thus preferably substantially corresponding to a semi ellipsoid or ovoid, so that both an upper and a lower denture can be fitted in the apparatus, the denture part corresponding to the teeth for both dentures thus substantially forming an oval, the upper and lower dentures fitting substantially at the same horizontal level in the apparatus. Preferably, the double palatine vault is 8cm long and 2cm high at the central highest point. The majority of upper and lower dentures were found to fit with such a palantine vault. The presence of the double palantine vault in the bath forms an elongated torroid-shaped valley, where the teeth of the denture sits. This arrangement has the advantage of providing an uniform heating of both dentures, due to the fact that heating in most microwave ovens tends to occur in horizontal planes, and that there tends to be a horizontal plane of concentrated microwave heating close to the base of most microwave ovens. This arrangement also has the advantage of avoiding the occurrence of electrical arcing between metallic parts which may be comprised in the upper and lower dentures, such arcing possibly occurring when microwave heating - because the upper and lower dentures are separated in this design, so that the metal parts of the upper and of the lower denture are unlikely to come into close contact, thus reducing the possibility of arcing during microwaving.

Also, a bath could be designed specifically for partial dentures, the apparatus comprising a core preferably in a single palatine vault shape, thus preferably substantially corresponding to a quarter of an ellipsoid or ovoid, so that only the upper or lower denture is fitted into the apparatus, for users that only have an upper or only a lower denture. In this case, the geometry of the valley in which the denture teeth will sit would be preferably horse-shoe shaped. In this case, a preferred fill-volume for cleaning fluid is from about 25 to 75 mL, more preferably from 30 to 55 mL, even more preferably of from 35 to 45 mL, and most preferably of 40 mL.

The apparatus of the invention is preferably made by standard moulding techniques such as injection moulding, including gas-assisted injection moulding and foamed injection moulding, blow moulding and vacuum forming. Highly preferred is injection moulding. Accordingly, preferred materials from which the apparatus is manufactured are those suitable for the method, including polypropylene, polyethylene, polycarbonate, polystyrene and styrene-acrylonitrile. Preferably, the material of construction should be microwave transparent. Preferred for its ease of injection moulding, impact resistance, low thermal conductivity and low cost is polypropylene. A preferred material for vacuum-forming is polystyrene. Preferably, the entire container is constructed in a single injection moulding step.

Preferably, the apparatus does not comprise electrical or mechanical agitating devices such as motors or the like. The denture cleaning apparatus can include appendages such as feet, handles, labels or the like.

The container has a container bottom and a container side wall such that it can contain a fluid. The cross-sectional area of the container, measured in the horizontal plane when the apparatus is in the upright position, is generally in the range from about 20 to about 100, more usually from about 40 to about 85 cm², preferably 81cm², in the case of an apparatus suitable to fit both an upper and a lower denture. The container can have a circular, regular polygonal or irregular cross-section (in horizontal plane), but should preferably have an ellipse shape in the case of an apparatus suitable to fit both an upper and a lower denture. For an apparatus suitable for one denture only, a shape of the section of an ellipse along its shorter axis would be preferred. The apparatus should also be suitable for accommodating a denture-holding basket.

The apparatus preferably comprises a basket for holding the denture, removably disposed within a first compartment formed by the container side wall and bottom, the basket having a basket bottom and a basket side wall, the basket bottom and the basket side wall defining a second compartment. In use the denture is preferably held within the second compartment. The basket can normally be lifted out of the first compartment for the purpose of safely removing the denture after cleaning. The basket has one or more holes or slots in the basket bottom and/or the basket side wall to allow communication of the fluid between the first and second compartments. Preferably the basket bottom has one or more holes or slots therein to provide for drainage of the cleaning fluid as the basket is lifted away from the container. Preferably, the basket will also have finger holes or handles, to allow removal from the container, without exposing the finger/hands of the user to hot liquid/steam.

The container optionally has a cover to prevent dirt falling into the container, to prevent splashing of the cleaning fluid whilst it is moved, and to keep product within the container during microwaving so that it doesn't spill onto the microwave. The cover also acts to reduce heat loss from the cleaning fluid. It should preferably cover the whole of the top of the container. The cover can be a separate, completely removable item or it can be fastened to the container. Suitably it is hinged to the container to prevent it from being lost and at the same time allowing easy access to the container so that the optional basket, denture or cleaning fluid can be added or removed. Alternatively, the cover can be hinged to the optional basket. In this way the cover can be used to help lift the basket out of the container. The cover can have knobs or flanges attached for this purpose. The cover may or may not contain holes through which steam will be allowed to escape from the bath.

In a preferred aspect of the invention the container side wall comprises thermal insulation means selected from:
i) a cavity wall,
ii) a cellular foam wall; and
iii) a thermally insulating jacket attached to and enclosing the container side wall.

Most preferably the container side wall comprises a cavity wall. By a cavity wall is meant a double wall, having an inner and outer wall, with a gap between the two walls. The cavity wall preferably extends over at least 75% of the height of the container and around at least 75% of the periphery of the container. More preferably, the cavity extends around the whole of the container such that the entire container side wall is a double wall. The inner wall is preferably integrally constructed with the outer wall. The outer wall can be attached to the inner at any point. Preferably it is continuously attached at the top or bottom of the container to facilitate moulding. In a preferred embodiment the outer wall is attached to the inner wall at the top of the container and the outer wall extends below the bottom of the container such that the container rests on the bottom edge of the outer wall when it is placed on a flat surface, with the bottom of the container, which is integrally constructed with the inner wall, being held above the surface. The inner and outer walls can be parallel but are preferably sufficiently divergent to allow for easy ejection of the container from a mould. The gap between the two walls can be completely closed or it can be open. Preferably it opens adjacent to the bottom of the container. If the gap between the inner and outer walls is closed it can contain a vacuum or a gas. In a highly preferred embodiment the entire container is constructed in a single injection moulding step.

The thermal insulation means can also be a cellular foam wall. This is suitably made by gas-assisted or foamed injection moulding as is known in the art. By a cellular foam wall is meant a continuous wall including a plurality of gas bubbles. The volume ratio of bubbles to plastic is preferably at least 2:1, more preferably at least 3:1.

The thermal insulation means can also be a thermally insulating jacket attached to and enclosing the container side wall. The jacket can be chemically attached to the container side wall, such as by adhesive, or it can be physically attached, for example by being shrink-wrapped onto it. Examples of this approach are described in US 5,469,983 which discloses laminated insulating sleeves for drink containers.

Of course the container can comprise two or more different insulation means, such as a double wall and a jacket, and the cover for the container can comprise the same insulation means as the container side wall.

In preferred embodiments the thermal insulation means are such that the apparatus has a Touch Temperature of less than 55°C, even when the temperature of an ~80ml volume (in the case of an apparatus fitting both a lower and an upper denture) of cleaning fluid held inside the bath has reached temperatures in the range 70-95°C, most commonly ~85°C at high power for 1 minute in a 800 watt rated microwave oven. The Touch Temperature is the temperature of the exterior of the container side wall, immediately on removal from the microwave oven, measured at a point half way down the wall and average over four readings taken at equally spaced points around the periphery (such as at North, South, East and West). The Touch Temperature is preferably less than 55°C, more preferably less than 50°C and especially less than 45°C. The Touch Temperature is also conveniently measured with temperature indicating strips pressed against the side of the container. In a preferred embodiment, the apparatus comprises a temperature sensitive indicator, for example by use of heat sensitive polymers which may be added to a resin or masterbatch, if the container is for example made from a resin or masterbatch.

The invention also relates to a method of cleaning a denture comprising soaking the denture in an aqueous solution, the solution comprising a cleaning agent and being contained within a denture cleaning apparatus according to the invention. In a preferred embodiment of this method, the aqueous solution is brought at a temperature of greater than 50°C, the heat being at least partially provided by micro-wave.

Preferably, the aqueous solution is prepared by dissolution or dispersion in water of a concentrated composition such as a concentrated liquid, paste or a solid, granular or tablet composition. In preferred embodiments herein the aqueous solution is prepared by dissolution in water of a tablet which effervesces on contact with water. Tablets provide a convenient unit dosage form and the effervescence helps disperse the tablet components. The composition can be a thermogenic composition such as described in US 4,115,293.

The cleaning agent can comprise a surfactant, a bleaching agent or an enzyme, or mixtures thereof. Suitable surfactants are selected from anionic surfactants, nonionic surfactants, amphoteric surfactants and mixtures thereof. The surfactant used in the denture cleansing compositions of the invention can be selected from the many available that are compatible with the other ingredients of the aqueous solution.

The cleaning agent preferably comprises a bleaching agent. The bleaching agent acts to clean and sterilise the denture. The bleaching agent is preferably selected from any of the well-known persalt bleaching agents known for use in denture cleansers such as the alkali metal and ammonium persulfates, perborates, percarbonates and perphosphates and the alkali metal and alkaline earth metal peroxides. Examples of suitable bleaching agents include potassium, ammonium, sodium and lithium persulfates and perborate mono- and tetrahydrates, sodium pyrophosphate peroxyhydrate and magnesium, calcium, strontium and zinc peroxides. Of these, however, the alkali metal persulfates, perborates and mixtures thereof are preferred for use herein, highly preferred being the alkali metal perborates.

Suitable perborate salts are the alkali metal perborates, particularly sodium perborate. Sodium perborate is preferably used as the monohydrate or anhydrous form, although the tetrahydrate can also be used. Especially preferred is the monohydrate or mixtures of the monohydrate and anhydrous forms of sodium perborate. Suitably the ratio of anhydrous to monohydrate is from 0:100 to about 30:70.

Enzymes can also optionally be used in the compositions of the present invention. Suitable enzymes include proteases, alkalases, amylases, lipases, dextranases, mutanases and glucanases.

Aqueous solutions employed in the methods of the invention can be supplemented by other usual components of such formulations, especially additional effervescence generators, bleach activators, desiccants, chelating agents, enzymes, flavours, physiological cooling agents, antimicrobial compounds, dyestuffs, sweeteners, foam stabilisers such as the fatty acid sugar esters, and preservatives.

Enzymes can also optionally be used in the compositions of the present invention. Suitable chelating agents and enzymes are described in WO 96/19563.

The denture is preferably allowed to soak for a period of one minute while being heated in a microwave oven, on high micro-wave power of the order of 800 W for 1 minute.

### Description of the preferred embodiments

The invention will now be described by way of example only, and with reference to the accompanying drawings in which:

Fig. 1 is a perspective view of a denture cleaning apparatus, comprising a container, a basket, and a cover, according to the present invention. The figure shows the basket partially inserted into the outer container.

Fig. 2 is a vertical cross-section of the container shown in Figure 1.

Fig. 3 is a perspective view of the container and of the cover shown in Figure 1.

Fig. 4 is a perspective view of the basket shown in Figure 1.

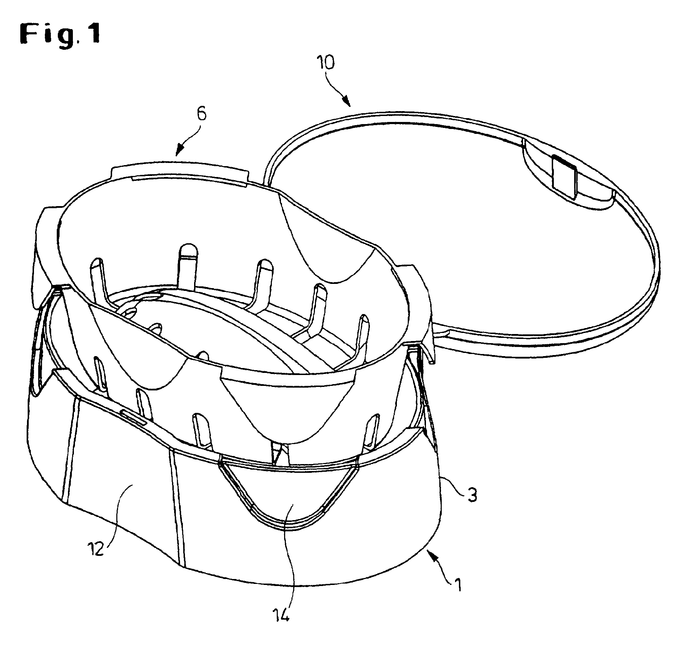

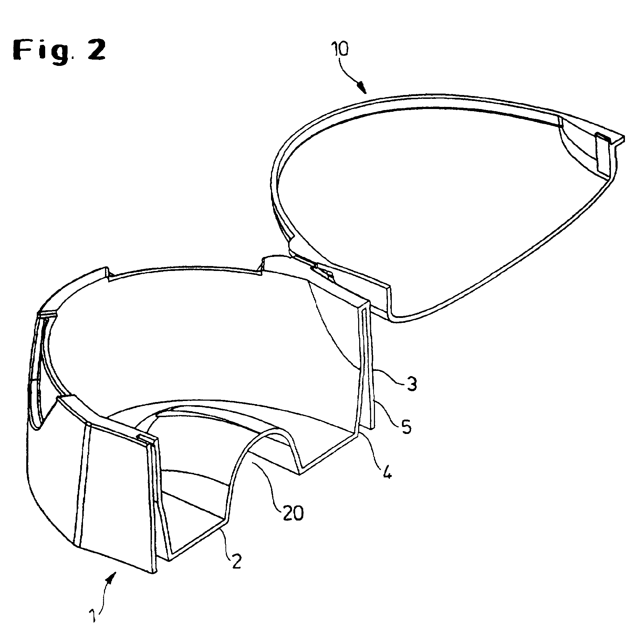

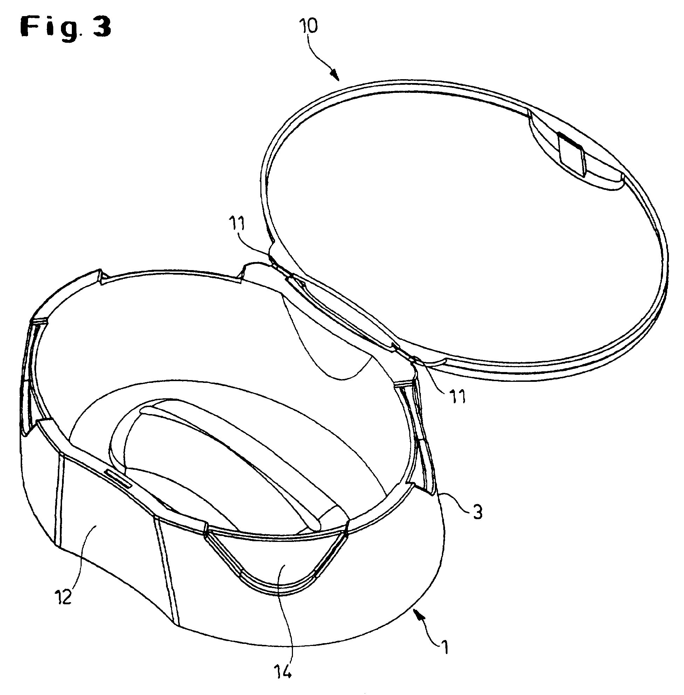

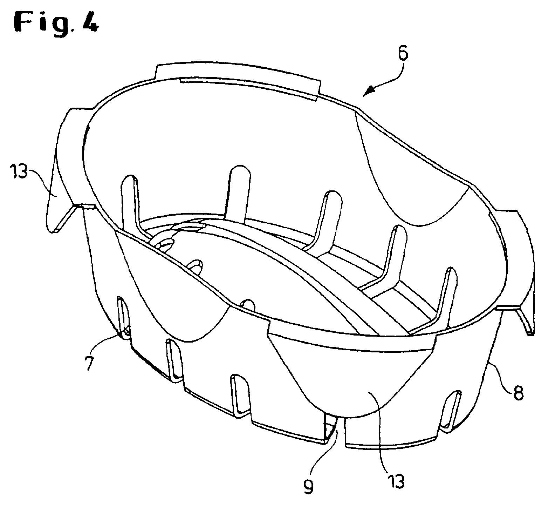

Referring now to Figures 1, 2, 3 and 4, a denture cleaning apparatus comprises a container 1 having a container bottom 2 and container side wall 3, the side wall being a double wall comprising inner wall 4 and outer wall 5 with a gap between. The double wall acts to reduce heat loss from hot fluid in the apparatus and also means that the outer wall 5 is comfortable to touch even when the container holds a very hot fluid. The container bottom comprises the core 20 having substantially the shape of a palatine vault and, in this particular case, of a "double" palatine vault allowing insertion of both an upper and a lower denture. The "double" palatine vault is in this example formed by a mirror image of the single palatine vault as seen in Figure 2. The apparatus further comprises a basket 6 which fits inside the container and is supported on its upper rim. Clearly, the basket has also a core having substantially the shape of a palatine vault in order to fit in the container 1. The basket 6 has holes 7, in the form of elongated slots, formed in the basket side wall 8 and basket bottom 9 to allow passage of the cleaning fluid between the interiors of the basket and the container. The dimensions of the container and the basket are such that, when the basket is fully inserted into the container, there is a clearance between the basket bottom and the container bottom sufficient to accommodate a denture cleansing tablet. The container 1 further comprises a cover 10 for the apparatus which articulates on the container via two living hinges 11. When the basket is fully inserted into the outer container and cover 10 is closed, the cover completely covers container 1. An undercut 12 on the outer wall 5 of the container assists the user in lifting the lid, if required, whilst the basket is inserted in the container. To further assist removal of the basket, the basket is provided with grip tabs 13 which depend from extensions of the upper rim of the basket and lie approximately parallel to the basket side wall. The tabs 13 mate with corresponding recesses 14 in the container side wall, so that when the basket is fully inserted into the container the tabs fit flush with the container peripheral wall. The tabs can optionally be provided with undercuts or surface decoration to provide additional grip. The internal dimensions of the container are such that, when the basket is fully inserted and contains a full denture, a volume of the composition in the range from about 70 to about 110 mL will fully cover the denture, depending on its size. The holes 7 in the basket can be of any size and shape provided that they allow fluid communication between the outer container 1 and the interior of the basket 6. In practice, there also needs to be sufficient material in the basket to give it sufficient rigidity to retain its shape.

In a preferred embodiment, in order to prevent the lid from becoming excessively hot, it is preferred to have a lid comprising thermal insulation means such as a double wall for example. This may be achieved by adding an insert to the lid, whereby the insert may for example snap into the lid, such a double wall thus providing extra insulation from rising steam.

In order to provide further thermal insulation to the device, materials including foamed polypropylene are considered more specifically for the container bottom. A material such as polycarbonate or filled polypropylene may advantageously be used for the basket, in particular to provide more rigidity when hot.

The optional basket may be equipped with ergonomic finger holds. In order to make such finger-holds intuitive to use, and to allow people to pick the basket out of the device with only one hand, it is preferred to add finger-holds at two ends of the basket, such finger-holds being preferably similar to the handles on a casserole dish. Preferably, the device and the basket comprising the finger holds would be of different colors. The finger holds may preferably be ribbed to provide better grip and reduce heat conduction.

Preferably, in order to prevent the container bottom from thermally damaging household surfaces, part of the container side walls, preferably the outer side wall, may have an extended length compared to the bottom level of the container bottom. Such a length extension may be of about 5mm.

Preferably, the container bottom comprises ribs or other thermal insulating means so as to protect from excessive heat a user touching the container bottom when hot liquid is in the device.

In order to prevent overflow due to boiling, a lip may be added to the optional basket, so that the lip covers any gap between the basket and the edge of the device, hence preventing liquid/steam from leaking up into the lid or out of the device. This lip may be raised slightly, so that it may meet the optional insert plate forming a double wall for the lid, helping to further seal the bath, and further preventing steam or liquid from entering any space between the insert plate and the lid.

The optional lid or cover for the container may comprise a knob facilitating lifting of the lid or cover. The knob may be mechanically linked to side catches so that rotation of the knob would unlatch the lid or cover and hence let it open. The knob should preferably be big enough to grip easily. It may also be ribbed, to allow for better thermal insulation.

It may be preferred not to have venting holes in order to keep the steam inside the bath, considering the risk of a user placing their hand over a venting hole and burning themselves.

## Claims

1. A denture cleaning apparatus consisting of a container (1), for holding cleaning fluid, having a container bottom (2) and a container side wall (3), characterised in that the container bottom (2) comprises a core (20).

2. An apparatus according to claim 1 wherein the core (20) has substantially the shape of a palatine vault

3. An apparatus according to any of the above claims wherein the entire container (1) is constructed in a single injection moulding step.

4. An apparatus according to any of the above claims, whereby the apparatus further comprises a basket (6), for holding the denture, removably disposed within a first compartment formed by the container (1), the basket (6) having a basket bottom (9) and a basket side wall (8), the basket bottom (9) and the basket side (8) wall defining a second compartment, the basket (6) having one or more holes (7) or slots in the basket bottom (9) or the basket side wall (8) to allow communication of the fluid between the first and second compartments, the apparatus also optionally comprising a cover (10) for the container.

5. The apparatus according to any of the above claims, whereby the container side wall (3) comprises thermal insulation means selected from a cavity wall, a cellular foam wall and a thermally insulating jacket attached to and enclosing the container side wall.

6. An apparatus according to any of the above claims, whereby the apparatus allows the fitting of both an upper and a lower dentures, the upper and lower dentures fitting substantially at the same horizontal level in the apparatus.

7. An apparatus according to any of the above claims, whereby the apparatus further comprises a temperature sensitive indicator.

8. An apparatus according to any of the above claims, whereby the filling volume for cleaning fluid is of less than 100 mL per denture.

9. A method of cleaning a denture comprising soaking the denture in an aqueous solution, the solution comprising a cleaning agent and being contained within a denture cleaning apparatus as in any of the above claims.

10. A method of cleaning a denture according to claim 9, whereby the aqueous solution is brought at a temperature of greater than 50°C, the heat being at least partially provided by micro-wave.
